# EUROPEAN PATENT SPECIFICATION

(11) **EP 1 887 865 B1**
(45) Date of publication and mention of the grant of the patent: **08.10.2014**
(21) Application number: 06763308.1
(22) Date of filing: 29.05.2006
(51) Int. Cl.: A01N 25/04, A01N 25/30, A01N 25/14, A01N 43/70, A01P 13/00

(54) **SYNERGISTIC BLENDS OF (ALKYL) NAPHTHALENE FORMALDEHYDE CONDENSATE SULFONATES AND LIGNOSULFONATES USEFUL IN AGROCHEMICAL FORMULATIONS**
SYNERGISTISCHE MISCHUNGEN VON (ALKYL)NAPHTHALINFORMALDEHYDKONDENSATSULFONATEN UND LIGNINSULFONATEN, DIE SICH FÜR AGRARCHEMISCHE FORMULIERUNGEN EIGNEN
MELANGES SYNERGIQUES DE SULFONATES DE CONDENSES D'(ALKYL) NAPHTALENE FORMALDEHYDE ET DE LIGNOSULFONATES UTILES DANS DES FORMULATIONS AGROCHIMIQUES

(30) Priority: 02.06.2005 US 686779 P
(43) Date of publication of application: 20.02.2008
(73) Proprietor: Akzo Nobel N.V., 6800 SB Arnhem (NL)
(72) Inventor: ALEXANDER, Mark, Forth Worth, TX, 76137 (US)
(74) Representative: Akzo Nobel IP Department
(86) International application number: PCT/EP2006/062649
(87) International publication number: WO 2006/128836

(56) References cited:
- EP-A1- 0 592 880
- EP-A1- 1 090 551
- WO-A-00/01234
- WO-A1-00/01234
- WO-A1-97/05777
- WO-A1-2006/079079
- US-A- 3 986 979
- US-A- 5 001 150
- US-A1- 2004 057 971
- US-A1- 2004 057 971
- DATABASE WPI Week 200429, Derwent Publications Ltd., London, GB; AN 2004-309246 -& JP 2004 083486 A (KUMIAI CHEM IND CO LTD) 18 March 2004

## Description

### Field of the Invention

The present invention generally relates to a synergistic blend of (alkyl) naphthalene formaldehyde condensate sulfonates and lignosulfonates useful in agrochemical formulations.

### Background of the Invention

Lignosulfonates and naphthalene condensate sulfonates are both used as dispersants in agricultural formulations, specifically suspension concentrates, suspoemulsions, water dispersible granules and wettable powders. Typically they are used alone in a formulation, but there are instances where they are used together in order to improve the physical stability and/or dilution performance of the finished product. When used together, the manufacturer will combine the individual liquids or powders into the formulation during manufacturing.

The present inventors have discovered an improved blend of lignosulfonates and naphthalene condensate sulfonates. More particularly, it has been discovered that the performance of lignin sulfonates plus naphthalene condensate sulfonates is increased when solutions of the two are blended and co-spray dried instead of blended together as individual powders, or added as individual solutions to the formulated product.

US 3 986 979 relates to a process for making a wetting-dispersing agent whereby an aqueous mixture of a sulfonated lignin dispersing agent and an anionic or non-ionic or non-ionic wetting agent are dried together to form a single product for use as a surfactant in pesticide formulation. However, naphthalene sulfonate formaldehyde condensates are not mentioned as aa dispersing agent

US 2004/0057971 relates to a water dispersible granule formulation containing the same or different active ingredients workable as an agricultural chemical and having different average particle sizes from one to another. However, the different ingredients are dry mixed, and are not co-dried into a free-flowing powder.

EP 1 090 551 relates to pesticide preparations in the form of aqueous suspensions wherein pesticidal active ingredients are dispersed in an aqueous vehicle containing a condensed arylsulfonic acid salt optionally combined with a lignin sulfonic salt. However, the condensed arylsulfonic acid salt and the lignin sulfonic salt are not co-dried into a free-flowing powder.

WO 97/05777 relates to a free-lowing, non-dusting water dispersible granule of a water insoluble agriculturally active ingredient comprising inter alia a dispersant. However, the components of the granule are added as separate aqueous mixtures that are then co-dried into the free-flowing powder.

EP 0 592 880 relates to an aqueous herbicidal composition comprising Linuron as the agriculturally active ingredient, a mixture of phenols and polyvinyl pyrrolidon, lignin sulfonates and salts of a polymeric alkylnaphtalene sulfonic acid. However, the lignin sulfonates and the salts of a polymeric alkylnaphtalene sulfonic acid are not co-dried into a free-flowing powder.

JP 2004/083486 relates to an aqueous suspension of sulfur that may contain a surfactant. However, naphthalene sulfonate formaldéhyde condensate and lignin sulfonate are not co-dried into a free-flowing powder.

### Summary of the Invention

The invention generally relates to a synergistic blend of (alkyl) naphthalene formaldehyde condensate sulfonates and lignosulfonates useful in agrochemical formulations. More particularly, the invention relates to a process for preparing an improved dispersing agent composition in the form of a free flowing powder, as well as a a dispersing agent composition consisting of a free-flowing powder as defined in the claims.

### Detailed Description of the Invention

The present invention relates to a process for preparing an improved dispersing agent composition useful in the agricultural industry. The process comprises blending an aqueous mixture of a) at least one lignin sulfonate, and an aqueous mixture of b) at least one naphthalene formaldehyde condensate sulfonate, in order to obtain a blended aqueous mixture of components a) and b), followed by drying said blended aqueous mixture in order to obtain said improved dispersing agent composition in the form of a free-flowing powder. The invention also relates to a dispersing agent composition consisting of a free-flowing powder of a blend of a) at least one lignin sulfonate, and b) at least one naphthalene condensate sulfonate obtained by blending an aqueous solution of component a) and b), followed by a drying step. Drying can be accomplished by various means, including evaporation, freeze-drying, spray drying and the like. In one embodiment, the drying is accomplished in a (co-) spray drying step.

The present inventors have found that the performance of lignin sulfonates plus naphthalene condensate sulfonates is increased when solutions of the two are blended and dried, such as by spray-drying, instead of blended together as individual dry powders, or added as individual solutions to the formulated product

Exemplary components a) are water-soluble salts of lignin sulfonate, e.g., the sodium, potassium, magnesium, calcium or ammonium salts of lignin sulfonate are preferably employed as component a) of the synergistic blend disclosed herein. The sodium salt of lignin sulfonate is preferred for use herein. Any commercially available lignin sulfonate salt which does not contain added surfactant, may be conveniently employed herein. Commercially available lignin sulfonate emulsifiers include, but are not limited to: Reax.RTM., LTS, LTK and LTM, respectively, the potassium, magnesium and sodium salts of lignosulfonate (50% aqueous solutions), Scott Paper Co., Forest Chemical Products; Marasperse CR.RTM. and Marasperse CBOS-3.RTM., sodium lignosulfonate, and Marasperse C21.RTM., calcium sulfonate, Reed Lignin Co., Polyfon O.RTM., Polyfon T.RTM., Reax 88B.RTM., Reax 85B.RTM., sodium salts of lignin sulfonate, Westvaco Polychemicals.

Component b) is an alkyl naphthalene formaldehyde condensate sulfonate of the formula: 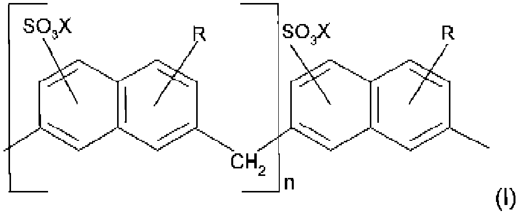 wherein each R is independently hydrogen, a C₁₋₃₀ straight or branched chain alkyl or alkenyl group, preferably a C₁₋₄ alkyl group; and each X is independently hydrogen, an alkali metal, an alkaline earth metal, ammonium, a mono-, di-, or tri- C₁₋₄ alkyl ammonium, or a mono-, di-or tri-C₁₋₄ hydroxyalkyl ammonium moiety. In the above formula 1, it is understood that the R groups can be present in any position on the naphthalene nucleus. The n groups show the repetition of the monomer units. In most embodiments, each n is on average from 1-25.

The alkyl naphthalene condensate sulfonates of formula I are preferably manufactured by the process of U.S. Patent No. 5,110,981 to Milstein. As stated in this patent, the alkyl naphthalene condensate sulfonates are usually obtained in the form of mixtures, containing both mono- and di-alkyl sulfonates, as well as small quantities of unreacted naphthalene and/or unsulfonated alkyl naphthalenes which will not interfere with their use in the practice of the present invention.

In general, components a) and b) are mixed together at 100% active concentrations in the following ratio 5:95 to 95:5, in another embodiment 10:90 to 90:10, in another embodiment 15:85 to 85:15, in another embodiment 25:75 to 75:25 and in still another embodiment of 50:50. Thereafter, aqueous solutions of each are prepared for use in preparing the free flowing powder of the invention.

Each of components a) and b) are typically obtained as 45% solids solutions from the respective synthesis routes. Once obtained, aqueous solutions of a) and b) are mixed together to form an aqueous blend of a) and b). Alternatively, a dry, or semi-dry powders of each of components a) and b) can be utilized. Said (semi)dry powders could be blended either before and/or after the addition of water, with the objective of obtaining an aqueous blend of a) and b).

The quantity of solution a) and b) are blended together to give the desired ratio, such as 15:85 and 85:15, based on the percent solids present in solution a) and b). Either solution a) or b) would be charged into the appropriate tank and heated to a target temperature to facilitate homogeneity, typically between 50°C and 70°C. Once the target temperature has been achieved the other solution is added to the tank. That mixture is mixed until homogenous. Homogeneity should be verified via analysis before the solution is dried.

Thereafter, the aqueous blend of a) and b) is dried in order to get the dry free-flowing powder of the invention. In one embodiment, the liquid blend is dried using a Co-current type spray drier. Suitably it is a top fed, atomized spray drier The inlet temperature on the drier ranges from 149°C(300°F) to 260°C (500°F) and the outlet temperature ranges between 93°C (200°F) and 132°C (270°F). The liquid if fed into the drier at a rate of between 37.8 and 75.7 liters (10 and 20 gallons) per minute.

The dry blends of the alkyl naphthalene condensate sulfonates and lignosulfonates are used as dispersants for wettable powders, water dispersible granules, suspension concentrates and suspoemulsions. Generally the blend is used with either non-ionic or an-ionic surfactant(s) acting as wetting agent or formulation stabilizer. The blends are used in suspension concentrates and suspoemulsions at a concentration range of 1.0 to 20%wt of the formulation, preferably 1.0 to 12.5%wt. Ideal embodiments utilize between 2.0 and 7.5%wt. In water dispersible granules and wettable powders, the use rate can range between 1.0 and 25%wt, preferably 2.0 to 15%wt but most desired between 2.5 and 10%wt.

The dry blends obtained according to the present invention can be used to disperse any, and all, insecticides, herbicides, fungicides and plant growth regulators that have a water solubility of less than 1000ppm and a melting point of greater than 50°C. The most preferred properties would be a water solubility of less than 400ppm and a glass transition temperature of 40°C or higher.

The invention will now be illustrated by the following non-limiting example.

### Example:

Two Atrazine suspension concentrates were produced; one using Morwet D-425 plus lignosulfonate, made by dry blending the two dry products, and the second used a Morwet + lignin powder wherein aqueous solutions of each were prepared, mixed, and co-spray dried. The following recipe was used to make the suspension concentrates:

| | |
|---|---|
| Atrazine - | 43.0%wt |
| Dispersant blend - | 2.5%wt |
| Water - | 54.5%wt |

The technical was dry milled to an average particle size of 5 microns, so the finished suspension concentrates were not wet milled. The dispersant blend was added to the water and mixed until homogenous. The technical was then added and dispersed using high shear. Shearing continued until all of the technical was wetted and dispersed. The suspensibility of the suspension concentrates was measured using CIPAC method MT161.

The suspensibility of the two suspension concentrates was measured, and the results were:

| **Dispersant** | 345 ppm water % **suspensibility** | 1000 ppm water **% suspensibility** |
|---|---|---|
| Calcium lignin : D-425 (mix) | 59.8 | 14.9 |
| Calcium lignin : D-425 (codry) | 83.4 | 49.8 |

The suspensibility of the suspension concentrate that contained the co-dried dispersant blend of the invention was substantially higher in 345ppm and 1000ppm water when compared to the suspension that contained the dry blend of dispersants according to the prior art. This result is both surprising and unexpected.

## Claims

1. A process for preparing an improved dispersing agent composition in the form of a free flowing powder, wherein said composition comprises a) at least one lignin sulfonate, and b) at least one naphthalene formaldehyde condensate sulfonate, said process comprising blending an aqueous mixture of a) and an aqueous mixture of b), in order to obtain a blended aqueous mixture of components a) and b), followed by drying said blended aqueous mixture in order to obtain said improved dispersing agent composition in the form of a free-flowing powder.

2. The process of claim 1 wherein said at least one lignin sulfonate is a water-soluble salt of lignin sulfonate.

3. The process of claim 2 wherein said water-soluble salt of lignin sulfonate is the sodium, potassium, magnesium, calcium or ammonium salt of lignin sulfonate.

4. The process of claim 1 wherein said at least one naphthalene condensate formaldehyde sulfonate is of the formula: 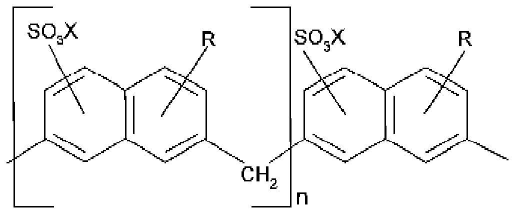 wherein each R is independently hydrogen, a C₁₋₃₀ straight or branched chain alkyl, or alkenyl group; each X is independently hydrogen, an alkali metal, an alkaline earth metal, ammonium, a mono-, di-, or tri- C₁₋₄ alkyl ammonium, or a mono-, di-or tri- C₁₋₄ hydroxyalkyl ammonium moiety, and n is an integer of from 1-25.

5. The process of claim 4 wherein each R is independently a C₁₋₄ alkyl group.

6. The process of claim 1 wherein the ratio of component a) at least one lignin sulfonate, and b) at least one naphthalene formaldehyde condensate sulfonate is in the range of from 5:95 to 95:5 at 100% actives concentration.

7. The process of claim 6 wherein the ratio of component a) to component b) is in the range of from 10:90 to 90:10 at 100% actives concentration.

8. The process of claim 7 wherein the ratio of component a) at least one lignin sulfonate, and b) at least one naphthalene formaldehyde condensate sulfonate is in the range of from 25:75 to 75:25 at 100% actives concentration.

9. A dispersing agent composition consisting of a free-flowing powder of a blend of a) at least one lignin sulfonate and b) at least one naphthalene condensate sulfonate, obtained by blending an aqueous solution of component a) and b), followed by a drying step.

## Patentansprüche

1. Verfahren zur Herstellung einer verbesserten Dispergiermittel-Zusammensetzung in Form eines rieselfähigen Pulvers, wobei die Zusammensetzung a) mindestens ein Ligninsulfonat und b) mindestens ein Naphtalin-Formaldehyd-Kondensat-Sulfonat aufweist, wobei das Verfahren das Mischen einer wässrigen Mischung aus a) und einer wässrigen Mischung aus b) aufweist, um eine vermischte wässrige Mischung der Komponenten a) und b) zu erhalten, gefolgt von dem Trocknen der vermischten wässrigen Mischung, um die verbesserte Dispergiermittel-Zusammensetzung in Form eines rieselfähigen Pulvers zu erhalten.

2. Verfahren nach Anspruch 1, wobei das mindestens eine Ligninsulfonat ein wasserlösliches Salz von Ligninsulfonat ist.

3. Verfahren nach Anspruch 2, wobei das wasserlösliche Salz von Ligninsulfonat Natrium-, Kalium-, Magnesium- oder Ammoniumsalz von Ligninsulfonat ist.

4. Verfahren nach Anspruch 1, wobei das mindestens eine Naphtalin-Formaldehyd-Kondensat-Sulfonat die folgende Formel hat: 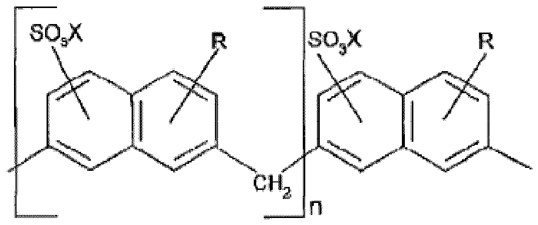 wobei jedes R unabhängig voneinander Wasserstoff, ein C_{1-3D} geradkettiges oder verzweigtkettiges Alkyl oder eine Alkenyl-Gruppe ist; jedes X unabhängig voneinander Wasserstoff, ein Alkalimetall, ein Erdalkalimetall, Ammonium, ein Mono-, Di- oder Tri-C₁₋₄ Alkylammonium oder ein Mono-, Di oder Tri-C₁₋₄ Hydroxyalkylammonium-Anteil, und n eine ganze Zahl von 1-25 ist.

5. Verfahren nach Anspruch 4, wobei jedes R unabhängig voneinander eine C₁₋₄ Alkyl-Gruppe ist.

6. Verfahren nach Anspruch 1, wobei das Verhältnis von Komponente a) mindestens ein Ligninsulfonat, und b) mindestens ein Naphtalin-Formaldehyd-Kondensat-Sulfonat in dem Bereich von 5:95 bis 95:5 bei 100% Wirkstoffkonzentration liegt.

7. Verfahren nach Anspruch 6, wobei das Verhältnis von Komponente a) zu Komponente b) in dem Bereich von 10:90 bis 90:10 bei 100% Wirkstoffkonzentration liegt.

8. Verfahren nach Anspruch 7, wobei das Verhältnis von Komponente a) mindestens ein Ligninsulfonat, und b) mindestens ein Naphtalin-Formaldehyd-Kondensat-Sulfonat in dem Bereich von 25:75 bis 75:25 bei 100% Wirkstoffkonzentration liegt.

9. Dispergiermittel-Zusammensetzung, aufweisend ein rieselfähiges Pulver einer Mischung aus a) mindestens einem Ligninsulfonat und b) mindestens einem Naphtalin- Kondensat-Sulfonat, das durch Mischen einer wässrigen Lösung von Komponente a) und b), gefolgt von einem Trocknungsschritt, erhalten ist.

## Revendications

1. Procédé pour la préparation d'une composition d'agent de dispersion améliorée sous la forme d'une poudre fluide, dans lequel ladite composition comprend a) au moins un sulfonate de lignine, et b) au moins un condensat de naphtalène sulfonate formaldéhyde, ledit procédé comprenant le fait de mélanger un mélange aqueux de a) et un mélange aqueux de b), afin d'obtenir un mélange aqueux mélangé des composants a) et b), suivi du séchage dudit mélange aqueux mélangé afin d'obtenir ladite composition d'agent de dispersion améliorée sous la forme d'une poudre fluide.

2. Procédé de la revendication 1, dans lequel ledit au moins un sulfonate de lignine est un sel hydrosoluble de sulfonate de lignine.

3. Procédé de la revendication 2, dans lequel ledit sel hydrosoluble de sulfonate de lignine est le sel de sodium, de potassium, de magnésium, de calcium ou d'ammonium de sulfonate de lignine.

4. Procédé de la revendication 1, dans lequel ledit au moins un condensat de naphtalène sulfonate formaldéhyde répond à la formule : 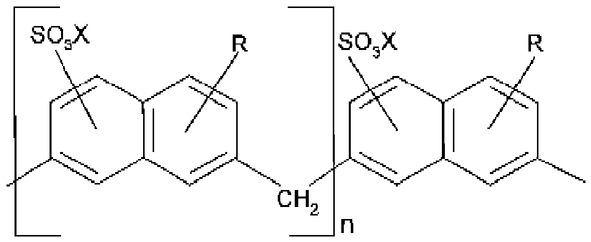 dans laquelle chaque R représente indépendamment un atome d'hydrogène, un groupe alkyle ou alcényle à chaîne droite ou ramifiée en C₁ à C₃₀ ; chaque X représente indépendamment un atome d'hydrogène, un métal alcalin, un métal alcalino-terreux, un groupe ammonium, un groupe mono-, di-, ou tri- alkylammonium en C₁ à C₄, ou un fragment mono-, di- ou tri hydroxyalkylammonium en C₁ à C₄, et n représente un nombre entier allant de 1 à 25.

5. Procédé de la revendication 4, dans lequel chaque R représente indépendamment un groupe alkyle en C₁ à C₄.

6. Procédé de la revendication 1, dans lequel le rapport d'un composant a) au moins un sulfonate de lignine, et b) au moins un condensat de naphtalène sulfonate formaldéhyde se trouve dans la plage allant de 5:95 à 95:5 à 100% de concentration active.

7. Procédé de la revendication 6, dans lequel le rapport du composant a) sur le composant b) se trouve dans la plage allant de 10:90 à 90:10 à 100% de concentration active.

8. Procédé de la revendication 7, dans lequel le rapport du composant a) au moins un sulfonate de lignine, et b) au moins condensat de naphtalène sulfonate formaldéhyde se trouve dans la plage allant de 25:75 à 75:25 à 100% de concentration active.

9. Composition d'agent de dispersion constituée d'une poudre fluide d'un mélange de a) au moins un sulfonate de lignine et de b) au moins un condensat de naphtalène sulfonate, obtenue par le mélange d'une solution aqueuse du composant a) et b), suivi d'une étape de séchage.
